# EUROPEAN PATENT SPECIFICATION

(11) **EP 1 690 324 B1**
(45) Date of publication and mention of the grant of the patent: **02.01.2008**
(21) Application number: 04811970.5
(22) Date of filing: 22.11.2004
(51) Int. Cl.: H01B 11/18, H01B 13/016, H02G 1/12

(54) **CORING TOOL FOR COAXIAL CABLE**
KERNBOHRWERKZEUG FÜR KOAXIALKABEL
OUTIL DE CAROTTAGE POUR CABLE COAXIAL

(30) Priority: 25.11.2003 US 524980 P
(43) Date of publication of application: 16.08.2006
(73) Proprietor: CommScope, Inc. of North Carolina, Hickory, NC 28602 (US)
(72) Inventor: GIALENIOS, Michael, Damon, Charlotte, NC 28269 (US); McDANIEL, Donald, Roger, II, Vale, NC 28168 (US)
(74) Representative: Schwartz, Thierry J.
(86) International application number: PCT/US2004/039349
(87) International publication number: WO 2005/055385

(56) References cited:
- US-A- 4 345 375
- US-A- 4 459 881
- US-A- 4 729 268
- US-A- 5 749 270

## Description

### BACKGROUND OF THE INVENTION

Coaxial cables commonly used today for transmission of RF signals, such as television signals, are typically constructed of a metallic inner conductor and a metallic sheath "coaxially" surrounding the core and serving as an outer conductor. A dielectric material surrounds the inner conductor and electrically insulates it from the surrounding metallic sheath. In many of the commercially available coaxial cable constructions, the dielectric material is an expanded foamed plastic, which surrounds the inner conductor and fills the spaces between the inner conductor and the surrounding metallic sheath.

Precoat layers are an integral part of most of these coaxial cable designs. The precoat is a thin, solid or foamed polymer layer that is extruded or applied in liquid emulsions over the surface of the inner conductor of the coaxial cable prior to the application of subsequent expanded foam or solid dielectric insulation layers. Precoats are usually made up of one or more of the following materials: a polyolefin, a polyolefin copolymer adhesive, an anti-corrosion additive and fillers. The precoat layer serves one or more of the following purposes: (1) It allows for a more controlled surface to be prepared on which to deposit subsequent extruded dielectric insulation layers. (2) It is used with or without added adhesive components to promote adhesion of the dielectric material to the center conductor in order to reduce movement of the center conductor in relation to the surrounding insulation. Significant movement of this type can cause the center conductor to pull back out of the grip of a field connector creating an open electrical circuit. This phenomenon creates a field failure commonly known as a center conductor "suck out". (3) It is used with or without added adhesive components to promote adhesion of the precoat layer and subsequent dielectric insulation layers to prevent dielectric shrink back. (4) It is used to reduce or eliminate water migration paths at the dielectric/center conductor interface. Water migration into the dielectric of the coaxial cable has obvious detrimental impacts such as increases in RF attenuation.

Unfortunately, a consequence of the design of currently available precoats meeting the above criteria is that the precoat layer requires extra steps to remove it from the center conductor prior to installation of the connector. During field installation of the coaxial cable, the ends of the cable must be prepared for receiving a connector that joins the cable to another cable or to a piece of network electrical equipment, such as an amplifier. The preparation of the cable end is typically performed using a commercially available coring tool sized to the diameter of the cable. For coaxial cables having a foam dielectric, the coring tool has an auger-like bit that drills out a portion of the foam dielectric to leave the inner conductor and outer conductor exposed. Examples of coring tools of this type are described in U.S. Patents 4,345,375, 4,459,881, 4,729,268, and 5,749,270, which is considered to represent the closest prior art.

The coring tools that are commercially available greatly facilitate preparing the cable end for receiving a connector, unfortunately, however, they do not consistently and reliably remove all of the precoat from the center conductor. Therefore, after this "coring" step and just prior to the installation of the connector, it has been necessary for the installer to physically remove any of the precoat layer that remains adhered to the inner conductor. The prescribed method employs a tool with a nonmetallic "blade" or scraper that the technician uses to scrape or peel back the precoat layer, removing it from the conductive metal surface of the inner conductor.

According to the procedures prescribed in the field installation manual "Broadband Applications and Construction Manual", sections 9.1 and 9.2 published by coaxial cable manufacturer CommScope, Inc., the field technician is instructed to use a non-metallic tool to clean the center (inner) conductor by scoring the coating on the center conductor at the shield and scraping it toward the end of the conductor. The conductor is clean if the copper is bright and shiny. If this step is not properly performed or if this step is completed with incorrect tools, such as knives or torches, the inner conductor or other components can be damaged, reducing the electrical and/or mechanical performance of the cable and reliability of the network.

From the foregoing, it should be evident that the need exists for improvements in a coaxial cable coring tool so that during the coring operation, the precoat layer will be reliably and consistently removed from the center conductor.

### BRIEF SUMMARY OF THE INVENTION

The present invention provides improvements in a coaxial cable coring tool which provides for reliable and consistent removal of the precoat during the coring operation. The coring tool is designed to reliably and completely remove all of the precoat layer from the center conductor of the cable during the operation of the tool. In preferred embodiments, the dimensional tolerances of the tool are controlled so that the precoat layer and the dielectric material are removed by, at least in part, a tearing, torsional force, rather than a slicing action, to thereby completely remove the precoat layer from the inner conductor by the operation of the coring tool.

The coring tool of the present invention is designed for preparing the end of a coaxial cable of the type that has an inner conductor, a precoat layer adhered to the inner conductor, a dielectric material adhered to the precoat layer, and a tubular metallic outer conductor of a predetermined diameter and thickness surrounding the dielectric material. The coring tool comprises a housing having an axially extending open end adapted for receiving the coaxial cable and a cutting tool mounted to the housing and extending coaxially toward said opening. The cutting tool includes a cylindrical coring portion having an outside diameter sized to be received within the outer conductor of the coaxial cable, an axially extending bore for receiving the inner conductor of the coaxial cable, and at least one cutting edge at the end of the coring portion which is configured for creating a tearing component on the dielectric material and precoat layer, rather than substantially entirely slicing the dielectric material and precoat.

The coring portion may include a channel or flute formed in the outer cylindrical surface of the coring portion and a generally radially extending surface at the axial end of the coring portion. In this instance, said at least one cutting edge comprises a generally radially extending cutting edge formed at the junction of the radial surface and the channel or flute. This radially extending cutting edge has a thickened, blunt configuration for imparting a tearing, torsional force on the dielectric material rather than a 100% slicing of the dielectric material. This radially extending cutting edge may desirably have a thickness of 0.03 to 0.13 cm (0.010 to 0.050 inch) or a radius of 0.01 to 0.06 cm (0.005 to 0.025 inch). The coring portion may additionally include a second cutting edge formed at the junction of the outer end of the flute or channel and the bore and extending in a direction generally parallel to the axis of the bore. This axially extending second cutting edge has a thickened, blunt configuration for creating a tearing action, rather than a slicing action, on the dielectric material and precoat layer. The axially extending second cutting edge may desirably have a thickness of from 0.01 to 0.08 cm (0.005 to 0.030 inch) or a radius of 0.01 to 0.04 cm (0.0025 to 0.015 inch).

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
FIG. 1 is a perspective view of a coaxial cable according to one embodiment of the invention.
FIG. 2 is a side elevation view of the end of a coaxial cable, with portions shown in cross-section.
FIG. 3 is a side elevation view of the coring tool.
FIG. 4a is a side elevation view showing one side of the cutter.
FIG. 4b is a side elevation view showing the opposite side of the cutter.
FIG. 5a is a side elevation view showing one side of another embodiment of the cutter.
FIG. 5b is a side elevation view showing the opposite side of the cutter of FIG. 5a.
FIG. 6 is a top elevation view showing the end of the cutter of FIGS. 5a and 5b.
FIG. 7 is an enlarged elevation view showing the working end of the cutter of FIGS. 4a and 4b.

### DETAILED DESCRIPTION OF THE INVENTION

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

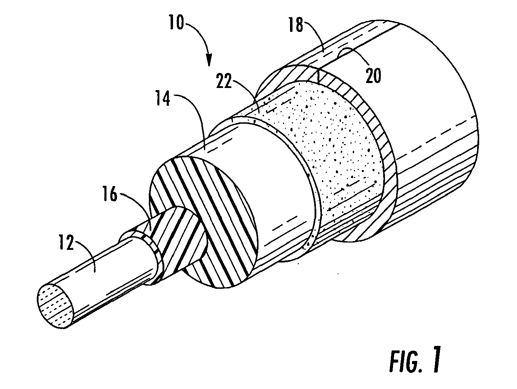

FIG. 1 illustrates a coaxial cable **10** of the type typically used as trunk and distribution cable for the long distance transmission of RF signals such as cable television signals, cellular telephone signals, internet, data and the like. Typically, the cable **10** illustrated in FIG. 1 has a diameter of between about 0.76 cm to about 5.08 cm (0.3 and about 2.0 inches) when used as trunk and distribution cable.

As illustrated in FIG. 1, the coaxial cable **10** comprises an inner conductor **12** of a suitable electrically conductive material and a surrounding dielectric layer **14.** The inner conductor **12** is preferably formed of copper, copper-clad aluminum, copper-clad steel, or aluminum. In addition, as illustrated in FIG. 1, the conductor **12** is typically a solid conductor. In the embodiment illustrated in FIG. 1, only a single inner conductor **12** is shown, located coaxially in the center of the cable, as this is the most common arrangement for coaxial cables of the type used for transmitting RF signals.

A dielectric layer **14** surrounds the center conductor **12** and precoat layer **16.** The dielectric layer **14** is a low loss dielectric formed of a suitable plastic such as polyethylene, polypropylene or polystyrene. Preferably, to reduce the mass of the dielectric per unit length and thus the dielectric constant, the dielectric material is an expanded cellular foam composition, and in particular, a closed cell foam composition is preferred because of its resistance to moisture transmission. The dielectric layer **14** is preferably a continuous cylindrical wall of expanded foam plastic dielectric material and is more preferably a foamed polyethylene, e.g., high-density polyethylene. Although the dielectric layer **14** of the invention generally consists of a foam material having a generally uniform density, the dielectric layer **14** may have a gradient or graduated density such that the density of the dielectric increases radially from the center conductor **12** to the outside surface of the dielectric layer, either in a continuous or a step-wise fashion. For example, a foam-solid laminate dielectric can be used wherein the dielectric **14** comprises a low-density foam dielectric layer surrounded by a solid dielectric layer. These constructions can be used to enhance the compressive strength and bending properties of the cable and permit reduced densities as low as 0.10 g/cc along the center conductor **12.** The lower density of the foam dielectric **14** along the center conductor **12** enhances the velocity of RF signal propagation and reduces signal attenuation.

A thin polymeric precoat layer **16** surrounds the center conductor **12** and adheres the center conductor to the surrounding dielectric **14.** The precoat layer **16** preferably has a thickness between 2.54µ to 0.5 mm (0.0001 to 0.020 inches), most desirably between 12.7µ to 0.25mm (0.0005 and 0.010 inches).

Closely surrounding the dielectric layer **14** is an outer conductor **18.** In the embodiment illustrated in FIG. 1, the outer conductor **18** is a tubular metallic sheath. The outer conductor **18** is formed of a suitable electrically conductive metal, such as aluminum, an aluminum alloy, copper, or a copper alloy. In the case of trunk and distribution cable, the outer conductor **18** is both mechanically and electrically continuous to allow the outer conductor **18** to mechanically and electrically seal the cable from outside influences as well as to prevent the leakage of RF radiation. However, the outer conductor **18** can be perforated to allow controlled leakage of RF energy for certain specialized radiating cable applications. In the embodiment illustrated in FIG. 1, the outer conductor **18** is made from a metallic strip that is formed into a tubular configuration with the opposing side edges butted together, and with the butted edges continuously joined by a continuous longitudinal weld, indicated at **20**. While production of the outer conductor **18** by longitudinal welding has been illustrated for this embodiment, persons skilled in the art will recognize that other known methods could be employed such as extruding a seamless tubular metallic sheath.

The inner surface of the outer conductor **18** is preferably continuously bonded throughout its length and throughout its circumferential extent to the outer surface of the dielectric layer **14** by a thin layer of adhesive **22**.

An optional protective jacket (not shown) may surround the outer conductor **18.** Suitable compositions for the outer protective jacket include thermoplastic coating materials such as polyethylene, polyvinyl chloride, polyurethane and rubbers.

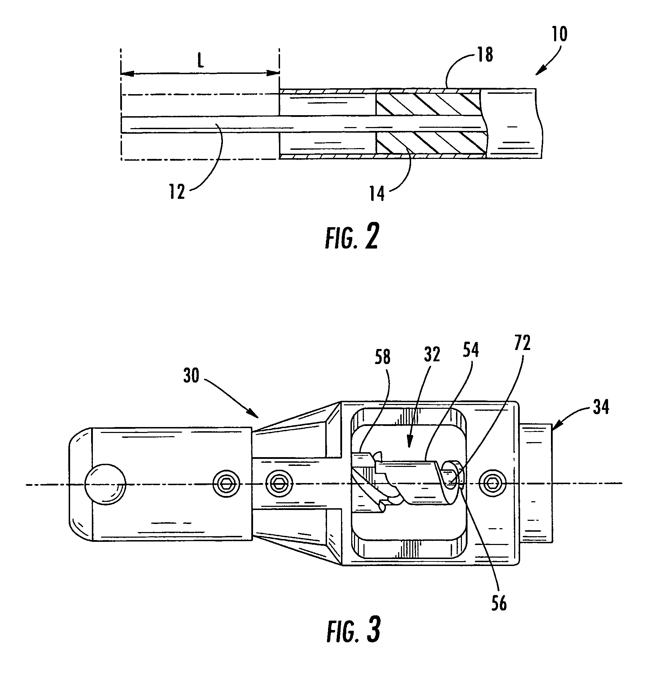

FIG. 2 illustrates the end of a coaxial cable **10** after a coring tool has cored it. A portion of the outer conductor **18** has been cut off to expose a length L of the center conductor projecting from the cable end. A portion of the foam dielectric **14** at the end of the cable has been removed by the coring tool to expose a portion of the sheath.

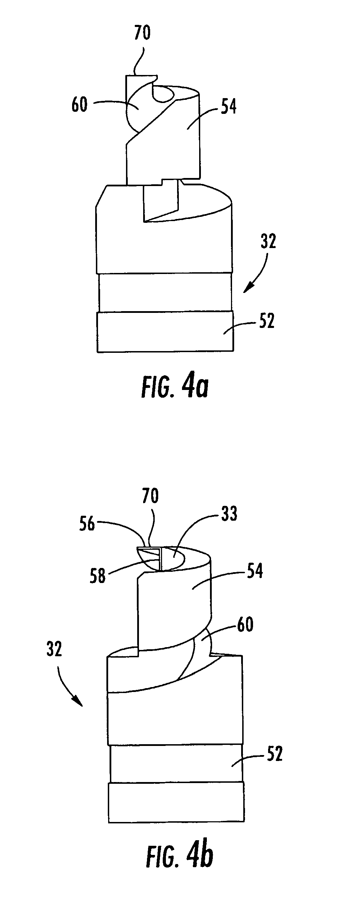

The coring tool, shown in FIG. 3, includes a housing **30** having an open end **34** adapted for receiving a cable. The open end **34** has an inside diameter corresponding generally to the outside diameter of the coaxial cable. The open end **34** has a cylindrical surface oriented axially of the tool that serves to guide the cable in coaxial alignment with the tool. A cutter **32** is mounted to one end of the housing and projects axially toward the open end **34.** The cutter **32,** which is shown in greater detail in FIGS. 4a and 4b, includes a cylindrical base portion **52** of a first outside diameter and an integrally formed cylindrical coring portion **54** of a somewhat smaller outside diameter. A bore **33** extends coaxially through the cutter **32** for receiving the cable center conductor therein. The outside diameter of the coring portion **54** is sized to be slightly less than the inside diameter of the tubular outer conductor **18** of the coaxial cable so that the coring portion **54** can be received within the outer conductor as the coring operation proceeds. In the illustrated embodiment, the coring portion **54** has an auger-like configuration with a helical channel or flute **60** being formed in the outer cylindrical surface of the coring portion **54** extending from the outermost axial end of the coring portion **54** and continuing back into the base portion **52**. At its outermost end, the coring portion includes a generally radially extending surface **70** terminating at the flute **60.** A generally radially extending cutting edge **56** is formed at the junction of the radial surface **70** and the flute **60.** Additionally, in the embodiment shown, a second cutting edge **58** is formed at the junction of the outer end of the flute and the bore. This cutting edge extends in a direction generally parallel to the axis of the bore.

During the coring operation, the end of a cable is placed through the open end 34 of the housing with the endmost surface of the cable dielectric contacting the axial end of cutting tool **32.** As the coring tool is rotated, the cutting tool engages and cuts the dielectric material and precoat layer, separating these materials from the inner conductor and from the outer conductor. The scrap pieces of dielectric material and precoat layer cut from the dielectric travel along the helical flute **60** as the cutter advances into the cable.

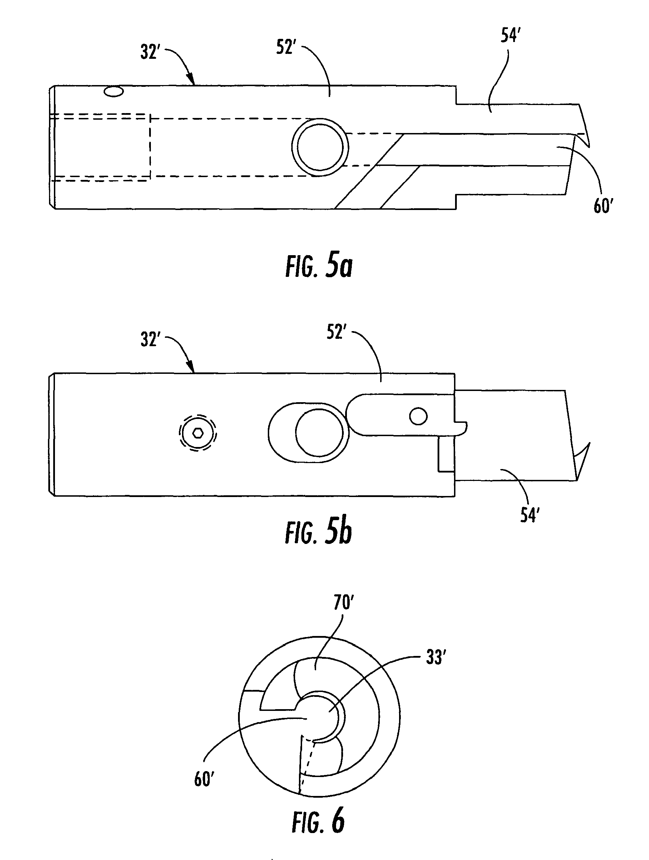

FIGS. 5a and 5b illustrates a cutter **32'** in accordance with an alternative embodiment of the invention. This cutter is similar in many respects to the embodiment shown in FIGS. 4a and 4b and to avoid repetitive description elements that correspond with those previously described in FIGS. 4a and 4b will be identified with the same reference numbers, with prime notation (') added. The principal difference between this cutter and that of FIGS. 4a and 4b is that the cylindrical coring portion **54'** does not have an external helical flute. Instead, a portion of the cylindrical wall of the coring portion has been milled away to form a channel 60' extending parallel to the axis of the cutter and exposing a portion of the bore **33'.** This channel **60'** continues in an axial direction to the enlarged base portion **52',** where it then extends in a generally angular direction. This channel **60'** serves to allow chips and scrap created by the cutting action of the coring tool to be removed from the cutter.

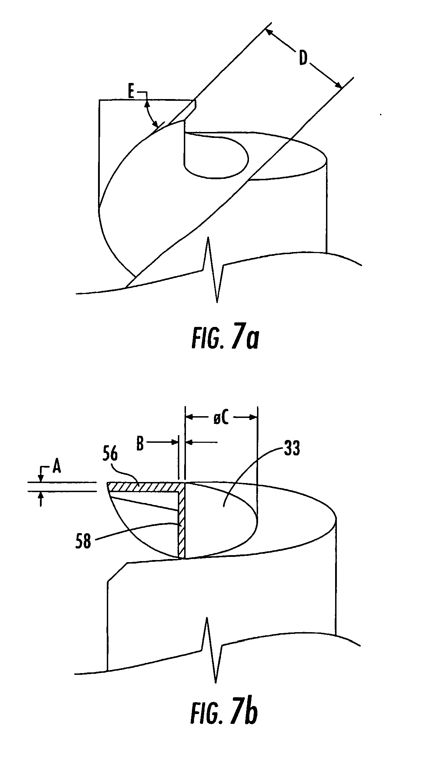

Existing coaxial cable coring tools incorporate a variety of criteria into the tool design. Some design attributes directly affect the ability of the tool to remove the dielectric and the precoat layer cleanly, while other attributes have no significant effect. The design criteria that exhibit the most influence in achieving removal of the precoat layer are the following:
1. Diameter of the inner bore (**33,33'**) that accepts the coaxial cable center conductor. This diameter is indicated by the reference character C in FIG. 7.
2. Angle of entry of the outward cutting edge and width of flute (for helix-type bits). See dimensions **E** and **D** respectively on FIG. 7.
3. Thickness of the radially extending cutting edge **56** located on the outward end of the coring tool bit. This edge is perpendicular to the coaxial cable axis and functions for cutting away a portion of the dielectric material as the coring tool is axially rotated. See dimension **A** on FIG. 7.
4. Thickness of the cutting edge **58** located near the outward end of the coring tool bit and forming a portion of the wall that defines the inner bore. This edge is parallel to the coaxial cable axis and functions for separating the dielectric material from the center conductor. See dimension **B** on FIG. 7.

For the coring tool to be effective in consistently removing the precoat layer, the above-noted design criteria must meet certain design specifications.

The diameter **C** of the inner bore **33** is a dimension that has minimal effect on tool performance when used with standard products. However, this dimension is very important in achieving complete removal of the precoat layer, and is especially important with cables with a precoat designed and engineered to strip cleanly from the center conductor, as is described in United States provisional patent Application No. 60/503,384, filed September 16, 2003, the disclosure of which is incorporated herein by reference.

More specifically, the clearance between the coring tool inner bore **33** and the coaxial cable center conductor **12** should be controlled such that the ratio of outer diameter of the cable center conductor D_{c} to the inner diameter of the bore D_{b} is within the range of 0.60 to 0.90. Tools with inner bore to center conductor clearances outside of this range become unable to consistently break the precoat/center conductor bond and cleanly remove the precoat layer. Measurements on commercially available coring tools reveal that this clearance percentage is not controlled, and varies over a wide range for various sizes and manufacturers of coring tools.

The entry angle of the coring bit will also influence performance. Additionally, for helix-type bit designs, the flute width will also influence performance. To successfully remove the dielectric material, the entry angle must be relatively aggressive. It is preferred that this angle (dimension **E** on FIG. 7) be within the range of 35 to 60 degrees, more desirably within the range of 37 to 50 degrees, and most desirably approximately 40 degrees.

In addition, for cutter designs that employ a helix-type flute **60** for scrap removal, the flute width (dimension **D** on FIG. 7) should be 0.51 cm to 0.70 cm (0.200 inch to 0.275 inch wide), most desirably from 0.51cm to 0.64 cm (0.200 to 0.250 inch) wide. These specifications promote complete removal of the dielectric by aggressively twisting the material about the coaxial cable center conductor and thereby breaking the bond between the precoat layer and the center conductor.

The thickness A, B of the cutting edges **56** and **58** determines whether the tool preferentially cuts or tears the dielectric material. With existing coring tools, it is common practice to use a sharp cutting edge to cut or slice the dielectric material from the cable end. However, this method of removal is ineffective for complete removal of the precoat layer. To effectively remove all dielectric material and adhering precoat, it is preferred that a tearing component be employed in preference to a cutting action. This is achieved by increasing the thickness or radius of the cutting edges on the coring portion **54** to present a somewhat blunt cutting edge. This tearing action of the coring tool cutting edges produces a tortional force on the dielectric material which is significantly greater than that achieved by a sharp cutting edge. This force, in turn, helps to remove the precoat from the cable center conductor by twisting the dielectric and breaking the precoat/center conductor bond.

The thickness or radius of these cutting edges is determined by the coring tool inner bore diameter clearance, entry angle and flute width. As the inner diameter bore clearance increases, the thickness or radius of the cutting edges should also increase. As the entry angle and/or flute width increases, the thickness or radius of the cutting edges should decrease. Preferably the radially extending cutting edge **56** should have a thickness **A** of from 0.03 to 0.13 cm (0.010 to 0.050 inch) or a radius equal to one half thickness **A**, and the cutting edge **58** extending parallel to the tool axis should have a thickness **B** of from 0.01 to 0.08 cm (0.005 to 0.030 inch) or a radius equal to one half thickness **B**.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A coring tool for preparing the end of a coaxial cable, said cable including an inner conductor, a precoat layer adhered to the inner conductor, a dielectric material adhered to the precoat layer, and a tubular metallic outer conductor of a predetermined diameter surrounding the dielectric material, said coring tool comprising: a housing having an axially extending open end adapted for receiving the coaxial cable and a cutting tool mounted to the housing and extending coaxially toward said opening, said cutting tool including cylindrical coring portion having an outside diameter sized to be received within the outer conductor of the coaxial cable, an axially extending bore for receiving the inner conductor of the coaxial cable, and at least one cutting edge at the end of the coring portion, **characterized in that** said at least one cutting edge has a thickened, blunt or radiused shape configured for creating a tearing component on the dielectric material and precoat layer, rather than substantially entirely slicing or shaving the dielectric material and precoat layer.

2. The coring tool of claim 1, wherein said coring portion includes a channel or flute formed in the outer cylindrical surface of the coring portion and a generally radially extending surface at the axial end of the coring portion, and wherein said at least one cutting edge comprises a generally radially extending cutting edge formed at the junction of the radial surface and the channel or flute, and wherein said radially extending cutting edge has a thickened, blunt or radiused configuration for imparting a tearing, torsional force on the dielectric material rather than substantially entirely slicing the dielectric material.

3. The coring tool of claim 2, wherein said radially extending cutting edge has a thickness of 0.03 to 0.13 cm (0.010 to 0.050 inch) or a radius of 0.01 to 0.06 cm (0.005 to 0.025 inch).

4. The coring tool of any preceding claim, wherein the coring portion includes a second cutting edge formed at the junction of the outer end of the flute or channel and the bore and extending in a direction generally parallel to the axis of the bore, and wherein said axially extending second cutting edge has a thickened, blunt or radiused configuration for tearing, rather than substantially entirely slicing the dielectric material and precoat layer.

5. The coring tool of claim 4, wherein said axially extending second cutting edge has a thickness of from 0.01 to 0.08 cm (0.005 to 0.030 inch) or a radius of 0.01 to 0.04 cm (0.0025 to 0.015 inch).

6. The coring tool of any preceding claim, wherein the ratio of outer diameter of the cable center conductor to the inner diameter of said bore is within the range of 0.60 to 0.90.

7. The coring tool of any preceding claim, wherein the entry angle of the cutting edge (dimension E on FIG. 7) is within the range of 35 to 60 degrees, and more desirably within the range of 37 to 50 degrees.

8. The coring tool of any preceding claim, which includes a helical flute on the cylindrical surface of the coring portion.

9. The coring tool of claim 8, wherein the flute width is 0.51 cm to 0.70 cm (0.200 inch to 0.275 inch wide).

10. The coring tool of any one of claims 1 to 7, which has an axially extending channel on the cylindrical surface of the coring portion exposing a portion of said bore.

11. The coring tool of any preceding claim wherein said at least one cutting edge comprises the radially extending cutting edge 56 which has a thickness (A on FIG. 7) of from 0.03 to 0.13 cm (0.010 to 0.050 inch) or a radius of 0.01 to 0.06 cm (0.005 to 0.025 inch).

12. A method for preparing the end of a coaxial cable which comprises removing a portion of the core at the end of the coaxial cable with the use of a coring tool as defined in any one of claims 1 to 11.

13. The use of a coring tool as defined in any one of claims 1 to 11 for the preparation of the end of a coaxial cable.

## Patentansprüche

1. Entkernungswerkzeug zum Präparieren des Endes eines Koaxialkabels, wobei das Kabel einen Innenleiter, eine an dem Innenleiter anhaftende Unterlagenschicht, ein an der Unterlagenschicht anhaftendes dielektrisches Material und einen das dielektrische Material umgebenden röhrenförmigen metallischen Außenleiter mit einem vorbestimmten Durchmesser beinhaltet, wobei das Entkernungswerkzeug umfasst: ein Gehäuse mit einem sich axial erstreckenden offenen Ende, welches zur Aufnahme des Koaxialkabels ausgestaltet ist, und ein Schneidwerkzeug, welches an dem Gehäuse angebracht ist und sich koaxial in Richtung der Öffnung erstreckt, wobei das Schneidwerkzeug einen zylindrischen Entkernungsabschnitt mit einem zur Aufnahme bemessenen Außehdurchmesser innerhalb des Außenleiters des Koaxialkabels, eine sich axial erstreckende Bohrung zur Aufnahme des Innenleiters des Koaxialkabels und wenigstens eine Schneidkante an dem Ende des Entkernungsabschnitts beinhaltet, **dadurch gekennzeichnet, dass** die wenigstens eine Schneidkante eine verdickte, stumpfe oder abgerundete Form aufweist, welche dazu ausgestaltet ist, eine Abreißkomponente an dem dielektrischen Material und der Unterlagenschicht zu erzeugen, anstelle das dielektrische Material und die Unterlagenschicht im Wesentlichen vollständig zu schneiden oder abzuschälen.

2. Entkernungswerkzeug nach Anspruch 1, wobei der Entkernungsabschnitt einen Kanal oder eine Kehle, welcher bzw. welche in der zylindrischen Außenfläche des Entkernungsabschnitts ausgebildet ist, und eine sich allgemein radial erstreckende Fläche an dem axialen Ende des Entkernungsabschnitts beinhaltet, und wobei die wenigstens eine Schneidkante eine sich allgemein radial erstreckende Schneidkante umfasst, welche an der Verbindung der radialen Fläche und des Kanals oder der Kehle ausgebildet ist, und wobei die sich radial erstreckende Schneidkante eine verdickte, stumpfe oder abgerundete Ausgestaltung aufweist, um eine Abreißtorsionskraft auf das dielektrische Material auszuüben, anstelle das dielektrische Material im Wesentlichen vollständig zu schneiden.

3. Entkernungswerkzeug nach Anspruch 2, wobei die sich radial erstreckende Schneidkante eine Dicke von 0,03 bis 0,13 cm (0,010 bis 0,050 Zoll) oder einen Radius von 0,01 bis 0,06 cm (0,005 bis 0,025 Zoll) aufweist.

4. Entkernungswerkzeug nach einem der vorhergehenden Ansprüche, wobei der Entkernungsabschnitt eine zweite Schneidkante beinhaltet, welche an der Verbindung des äußeren Endes der Kehle oder des Kanals und der Bohrung ausgebildet ist und sich in einer Richtung allgemein parallel zu der Achse der Bohrung erstreckt, und wobei die sich axial erstreckende zweite Schneidkante eine verdickte, stumpfe oder abgerundete Ausgestaltung aufweist, um das dielektrische Material und die Unterlagenschicht zu reißen, anstelle im Wesentlichen vollständig zu schneiden.

5. Entkernungswerkzeug nach Anspruch 4, wobei die sich axial erstreckende zweite Schneidkante eine Dicke von 0,01 bis 0,08 cm (0,005 bis 0,030 Zoll) oder einen Radius von 0,01 bis 0,04 cm (0,0025 bis 0,015 Zoll) aufweist.

6. Entkernungswerkzeug nach einem der vorhergehenden Ansprüche, wobei das Verhältnis von Außendurchmesser des Kabelmittelleiters zu dem Innendurchmesser der Bohrung innerhalb des Bereichs von 0,60 bis 0,90 liegt.

7. Entkernungswerkzeug nach einem der vorhergehenden Ansprüche, wobei der Eintrittswinkel der Schneidkante (Abmessung E in FIG. 7) innerhalb des Bereichs von 35 bis 60 Grad und bevorzugter innerhalb des Bereichs von 37 bis 50 Grad liegt.

8. Entkernungswerkzeug nach einem der vorhergehenden Ansprüche, welches eine helixartige Kehle auf der zylindrischen Fläche des Entkernungsabschnitts beinhaltet.

9. Entkernungswerkzeug nach Anspruch 8, wobei die Kehlenbreite 0,51 cm bis 0,70 cm (0,200 Zoll bis 0,275 Zoll breit) ist.

10. Entkernungswerkzeug nach einem der Ansprüche 1 bis 7, welches einen sich axial erstreckenden Kanal auf der zylindrischen Fläche des Entkernungsabschnitts aufweist, welcher einen Abschnitt der Bohrung freilegt.

11. Entkernungswerkzeug nach einem der vorhergehenden Ansprüche, wobei die wenigstens eine Schneidkante die sich radial erstreckende Schneidkante 56 umfasst, welche eine Dicke (A in FIG. 7) von 0,03 bis 0,13 cm (0,010 bis 0,050 Zoll) oder einen Radius von 0,01 bis 0,06 cm (0,005 bis 0,025 Zoll) aufweist.

12. Verfahren zum Präparieren des Endes eines Koaxialkabels, welches ein Entfernen eines Abschnitts des Kerns an dem Ende des Koaxialkabels unter Verwendung eines Entkernungswerkzeugs wie in einem der Ansprüche 1 bis 11 definiert umfasst.

13. Verwendung eines Entkernungswerkzeugs wie in einem der Ansprüche 1 bis 11 definiert für das Präparieren des Endes einen Koaxialkabels.

## Revendications

1. Outil d'évidage destiné à préparer l'extrémité d'un câble coaxial, ledit câble comprenant un conducteur interne, une précouche à laquelle adhère le conducteur interne, un matériau diélectrique adhérant à la précouche et un conducteur externe métallique tubulaire d'un diamètre prédéterminé entourant le matériau diélectrique, ledit outil d'évidage comprenant : un logement ayant une extrémité ouverte s'étendant dans le sens axial adaptée pour recevoir un câble coaxial, et un outil de découpe monté sur le logement et s'étendant de façon coaxiale en direction de ladite ouverture, ledit outil de découpe comprenant une partie d'évidage cylindrique ayant un diamètre extérieur d'une taille adaptée au conducteur extérieur du câble coaxial, un alésage s'étendant dans le sens axial destiné à recevoir le conducteur interne du câble coaxial, et au moins un bord tranchant à l'extrémité de la partie d'évidage, **caractérisé en ce que** ledit au moins un bord tranchant possède une forme épaissie, émoussée ou arrondie configurée pour créer un élément qui déchire le matériau diélectrique et la précouche, au lieu de trancher ou d'araser pratiquement d'un coup le matériau diélectrique et la précouche.

2. Outil d'évidage selon la revendication 1, dans lequel ladite partie d'évidage comprend un canal ou une goujure formée dans la surface cylindrique externe de la partie d'évidage et une surface s'étendant, dans l'ensemble, dans le sens radial à l'extrémité axiale de la partie d'évidage, et dans lequel ledit au moins un bord tranchant se compose d'un bord tranchant s'étendant, dans l'ensemble, dans le sens radial, formé à la jonction de la surface radiale et du canal ou de la goujure, et dans lequel ledit bord tranchant s'étendant dans le sens radial présente une configuration épaissie, émoussée ou arrondie pour exercer une force de déchirement par tension sur le matériau diélectrique, au lieu de découper pratiquement d'un coup le matériau diélectrique.

3. Outil d'évidage selon la revendication 2, dans lequel ledit bord tranchant s'étendant dans le sens radial possède une épaisseur de 0,03 à 0,13 cm (0,010 à 0,050 pouce) ou un rayon de 0,01 à 0,06 cm (0,005 à 0,025 pouce).

4. Outil d'évidage selon l'une quelconque des revendications précédentes, dans lequel la partie d'évidage comprend un second bord tranchant formé à la jonction de l'extrémité externe de la goujure ou du canal et de l'alésage, et s'étendant dans une direction, dans l'ensemble, parallèle à l'axe de l'alésage et dans lequel ledit second bord tranchant s'étendant dans le sens axial a une configuration épaissie, émoussée ou arrondie pour déchirer, au lieu de découper pratiquement d'un coup le matériau diélectrique et la précouche.

5. Outil d'évidage selon la revendication 4, dans lequel ledit second bord tranchant s'étendant dans le sens axial présente une épaisseur de 0,01 à 0,08 cm (0,005 à 0,030 pouce) ou un rayon de 0,01 à 0,04 cm (0,0025 à 0,015 pouce).

6. Outil d'évidage selon l'une quelconque des revendications précédentes, dans lequel le rapport du diamètre externe du conducteur central du câble sur le diamètre interne dudit alésage se trouve dans la plage de 0,60 à 0,90.

7. Outil d'évidage selon l'une quelconque des revendications précédentes, dans lequel l'angle de pénétration du bord tranchant (dimension E sur la figure 7) se trouve dans la plage de 35 à 60 degrés, et de façon préférée dans la plage de 37 à 50 degrés.

8. Outil d'évidage selon l'une quelconque des revendications précédentes, comprenant une goujure hélicoïdale sur la surface cylindrique de la partie d'évidage.

9. Outil d'évidage selon la revendication 8, dans lequel la largeur de la goujure est de 0,51 cm à 0,70 cm (0,200 pouce à 0,275 pouce de largeur).

10. Outil d'évidage selon l'une quelconque des revendications 1 à 7, comportant un canal s'étendant dans le sens axial sur la surface cylindrique de la partie d'évidage et exposant une partie dudit alésage.

11. Outil d'évidage selon l'une quelconque des revendications précédentes, dans lequel ledit au moins un bord tranchant comprend le bord tranchant s'étendant dans le sens radial 56, ayant une épaisseur (A sur la figure 7) de 0,03 à 0,13 cm (0,010 à 0,050 pouce) ou un rayon de 0,01 à 0,06 cm (0,005 à 0,025 pouce).

12. Procédé de préparation de l'extrémité d'un câble coaxial comprenant l'extraction d'une partie de l'âme, à l'extrémité du câble coaxial, à l'aide d'un outil d'évidage tel que défini dans l'une quelconque des revendications 1 à 11.

13. Utilisation d'un outil d'évidage tel que défini dans l'une quelconque des revendications 1 à 11 pour la préparation de l'extrémité d'un câble coaxial.
